# EUROPEAN PATENT APPLICATION

(11) **EP 4 566 896 A1**
(43) Date of publication of application: **11.06.2025**
(21) Application number: 23849505.5
(22) Date of filing: 03.08.2023
(51) Int. Cl.: B60R 21/215, B60R 21/205

(54) **AIRBAG DOOR STRUCTURE, VEHICLE INTERIOR COMPONENT, AND MANUFACTURING METHOD**

(30) Priority: 04.08.2022 CN 202210933473
(71) Applicant: Shanghai Yanfeng Jinqiao Automotive Trim Systems Co., Ltd., Shanghai 201206 (CN)
(72) Inventor: CENG, Tairen, Shanghai 201206 (CN); CHEN, Yuhua, Shanghai 201206 (CN); BU, Haitao, Shanghai 201206 (CN)
(74) Representative: Meissner Bolte Partnerschaft mbB
(86) International application number: PCT/CN2023/111065
(87) International publication number: WO 2024/027801

(57) **Abstract**

An airbag door structure. Mesh fabric (4) is connected and fixed on the inner side of a framework (3) facing an airbag; the framework (3) comprises a door cover (31) and a side panel (32) which are connected by means of a hinge (33); the door cover (31) is provided with a first pressing rib (312), and at least one recess (311) formed in the bottom surface of the door cover close to the hinge (33); the recess (311) is located between the hinge (33) and the first pressing rib (312) so as to improve the force of binding between the mesh fabric (4) in the recess (311) and the door cover (31) and limit the mesh fabric (4) located at the first pressing rib (312) to the bottom of the first pressing rib (312); the mesh fabric (4) connected to the side panel (32) is provided with a first lifting ring (41) and a second lifting ring (42) which are connected in series, so as to facilitate absorption of airbag impact energy by means of inserted injection molding of the double-lifting-ring mesh fabric.

## Description

### Technical Field

The invention relates to airbags, and more particularly to an airbag door structure, a vehicle interior component, and a manufacturing method.

### Background Art

A co-driver airbag on the vehicle is mounted below an instrument panel. The airbag is exploded and opened from the instrument panel at the time of a collision and is inflated to protect the co-driver.

Known airbag door structures typically employ an inserted injection molding structure of a mesh fabric and a framework. Such an airbag door structure has advantages of reduced cost and simple structure with respect to other structures. However, in the low-temperature ignition experiment process, the airbag door structure always has the problems of poor combination of the mesh fabric and the airbag door, cracking or breaking of the mesh fabric pressing rib of the airbag door during explosion, and the failure point of detachment between an airbag door cover and a mesh fabric, which lead to the failure of low-temperature ignition. How to better design a better energy-absorbing airbag door structure, especially under demanding conditions, to ensure the integrity of the airbag door cover and increase the safety margin of the ignition experiment becomes an urgent need, which plays a significant role in increasing the safety of passengers.

### Summary of the Invention

The invention provides an airbag door structure, a vehicle interior component, and a manufacturing method, in order to solve the above-mentioned problems of poor combination of a mesh fabric and an airbag door during explosion in the prior art.

According to the airbag door structure of the invention, a mesh fabric is connected and fixed on an inner side of a framework facing an airbag; the framework comprising a door cover and a side panel which are connected by means of a hinge, wherein the door cover is provided with a first pressing rib, and at least one recess formed in the bottom surface of the door cover close to the hinge; the recess being located between the hinge and the first pressing rib so as to improve the force of binding between the mesh fabric in the recess and the door cover and limit the mesh fabric located at the first pressing rib to a bottom of the first pressing rib; the mesh fabric connected to the side panel is provided with a first lifting ring and a second lifting ring which are connected in series, so as to facilitate absorption of airbag impact energy by means of inserted injection molding of the double-lifting-ring mesh fabric.

Preferably, the recess is disposed to extend parallel to the hinge.

Preferably, the recess is a continuously extending wave groove or is provided by discrete semi-circular arc segments.

Preferably, a minimum distance of the recess from the hinge is set to 3 to 5 mm, and a distance of the first pressing rib from the hinge is set to 10 to 30 mm.

Preferably, the mesh fabric connected on the door cover has a weft density adjusted in segment.

Preferably, the mesh fabric connected on the door cover comprises a first region disposed close to the hinge and a second region disposed away from the hinge, the mesh fabric of the first region having a first weft density and the mesh fabric of the second region having a second weft density, the first weft density being less than the second weft density.

Preferably, the first weft density is 3 threads per 10 mm or less.

Preferably, the second weft density is 5 to 7 threads per 10 mm.

Preferably, the door cover is provided with a first pressing rib located in the first region.

Preferably, the mesh fabric is connected to the framework by means of inserted injection molding, and a part of resin penetrates through the mesh fabric during the inserted injection molding, thereby forming a reinforcing rib at an outer surface of the mesh fabric corresponding to the recess to improve the force of binding between the mesh fabric and the door cover.

A vehicle interior component according to the invention comprises an instrument panel on which an airbag door structure is mounted, a mesh fabric is connected and fixed on an inner side of a framework facing an airbag; the framework comprising a door cover and a side panel which are connected by means of a hinge, wherein the door cover forms at least one recess on a bottom surface close to the hinge to improve the force of binding between the mesh fabric in the recess and the door cover.

Preferably, the recess extends parallel to the hinge.

Preferably, the recess is a continuously extending wave groove.

Preferably, the recess is provided by discrete semi-circular arc segments.

Preferably, a minimum distance of the recess from the hinge is 3 to 5 mm.

Preferably, the door cover comprises at least a first region disposed close to the hinge and a second region disposed away from the hinge.

Preferably, the mesh fabric connected on the door cover has a weft density adjusted in segment.

Preferably, the mesh fabric connected on the door cover comprises a first region disposed close to the hinge and a second region disposed away from the hinge, the mesh fabric of the first region having a first weft density and the mesh fabric of the second region having a second weft density, the first weft density being less than the second weft density.

Preferably, the first weft density is 3 threads per 10 mm or less.

Preferably, the second weft density is 5 to 7 threads per 10 mm.

Preferably, the door cover has at least one pressing rib.

Preferably, the pressing rib is formed on a bottom surface close to the hinge.

Preferably, the pressing rib is located in the first region.

Preferably, a distance between the pressing rib and the hinge is 10 to 30 mm.

Preferably, the mesh fabric is connected to the side panel and has at least one lifting ring to facilitate absorption of airbag impact energy.

Preferably, the mesh fabric is connected to the side panel and has a first lifting ring and a second lifting ring in series with the first lifting ring to facilitate absorption of airbag impact energy.

Preferably, the mesh fabric is connected to the framework by means of inserted injection molding, and a part of resin penetrates through the mesh fabric during the inserted injection molding, thereby forming at least one reinforcing rib at an outer surface of the mesh fabric corresponding to the recess to improve the force of binding between the mesh fabric and the door cover.

Preferably, the door cover is provided with a first pressing rib formed on a bottom surface close to the hinge, and the recess is disposed between the hinge and the first pressing rib so as to improve the force of binding between the mesh fabric in the recess and the door cover.

Preferably, the door cover is provided with a first pressing rib formed on a bottom surface close to the hinge, and the recess is disposed between the hinge and the first pressing rib to limit the mesh fabric located at the first pressing rib to a bottom of the first pressing rib.

Preferably, the mesh fabric is connected to the framework by means of inserted injection molding, and a part of resin penetrates through the mesh fabric during the inserted injection molding, thereby forming a reinforcing rib at an outer surface of the mesh fabric corresponding to the recess to improve the force of binding between the mesh fabric and the door cover.

A method for manufacturing a vehicle interior component according to the invention comprising an instrument panel on which an airbag door structure is mounted comprises: forming a framework, a door cover, at least one reinforcing rib and a recess; connecting a mesh fabric to the framework by means of inserted injection molding; and a part of resin penetrating through the mesh fabric during the inserted injection molding, thereby forming a reinforcing rib at an outer surface of the mesh fabric corresponding to the recess to improve the force of binding between the mesh fabric and the door cover.

Preferably, the mesh fabric is formed on a side panel of the framework.

Preferably, the mesh fabric is inserted injection molded from a double-lifting-ring mesh fabric having a first lifting ring and a second lifting ring in series.

According to the airbag door structure of the invention, through the recess on the door cover and the inserted injection molding of the double-lifting-ring mesh fabric to avoid the detachment of the mesh fabric from the airbag door during explosion, it is possible to improve the safety factor of ignition and a first-pass yield, to save the development cost, and to save the experimental cost of batch ignition, to solve the most severe ignition problem of the airbag door without increasing the cost, and to let the instrument panel ignition pass once.

### Brief Description of the Drawings

- FIG. 1A: is a schematic view of a vehicle having an airbag door structure according to a preferred embodiment of the invention;
- FIG. 1B: shows a specific mounting position on an instrument panel of the airbag door structure of FIG. 1A;
- FIG. 1C: is a partial exploded view of the instrument panel of FIG. 1B;
- FIG. 2A: is a schematic view of the structure of FIG. 1C after the framework and mesh fabric are connected;
- FIG. 2B: is a cross-sectional view along line A-A of FIG. 2A;
- FIG. 3: is a bottom view of the cover panel of FIG. 2B;
- FIG. 4: is an enlarged view of region B of FIG. 2B;
- FIG. 5: is an enlarged view of region C of FIG. 2B;
- FIG. 6: is a bottom view of the cover panel region of FIG. 2B; and
- FIG. 7: is a bottom view of the cover panel region (including the recess) of FIG. 2B.

### Detailed Description of the Invention

Hereinafter, preferred embodiments of the invention will be described in detail with reference to the accompanying drawings.

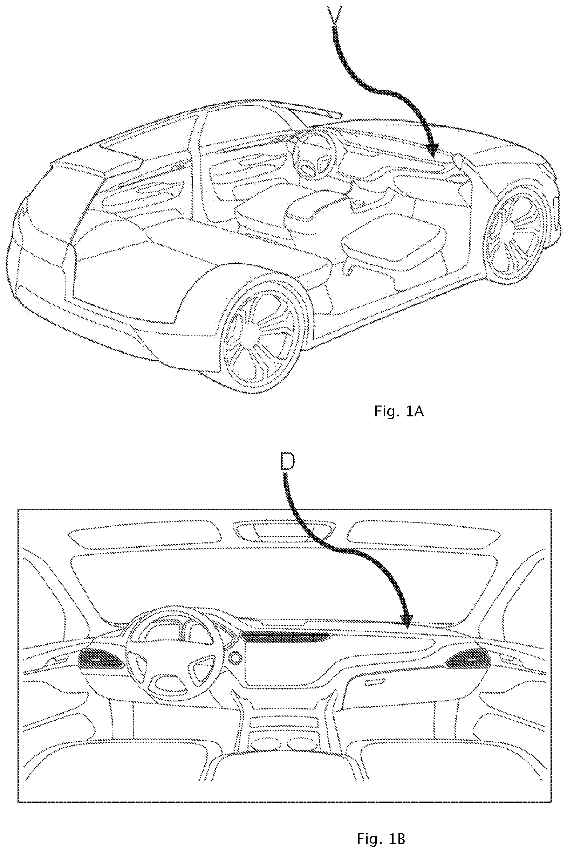

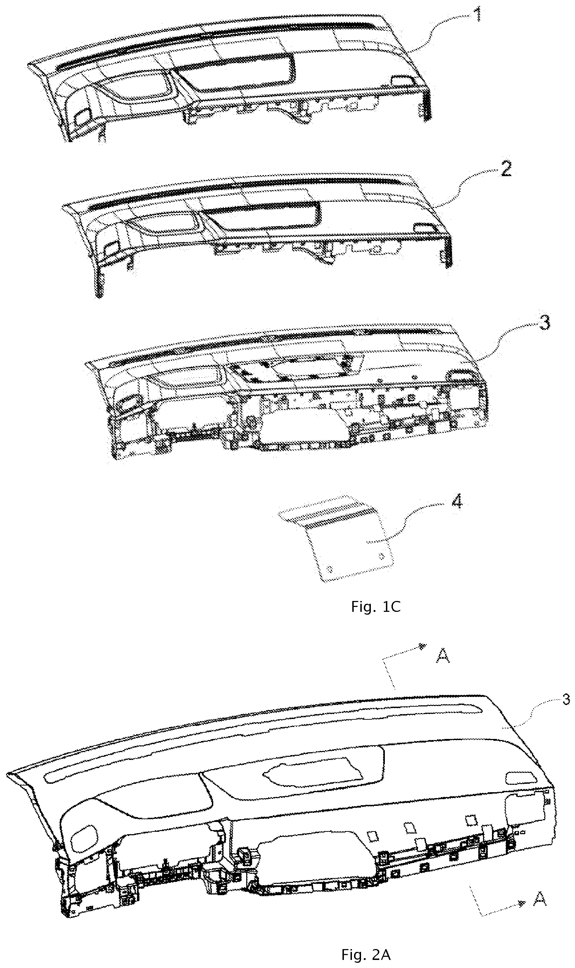

As shown in FIGS. 1A-1C, an airbag door structure according to a preferred embodiment of the invention is mounted on an instrument panel D on a co-driver side of a vehicle V, and comprises a skin layer 1, a foamed layer 2, a framework 3, and a mesh fabric 4, wherein the mesh fabric 4 is fixedly connected below an airbag door region of the framework 3, the foamed layer 2 is covered above the framework 3 to provide a soft touch of the instrument panel D, and the skin layer 1 is covered above the foamed layer 2 to provide a cortical appearance of the instrument panel D. At the time of a collision, the airbag located below the mesh fabric 4 is ignited and opened from the inside of the instrument panel D and inflated to protect the co-driver.

As shown in FIGS. 2A-2B, the mesh fabric 4 of the airbag door structure according to the present embodiment is connected and fixed on the inner side of the framework 3 facing the airbag. Specifically, the framework 3 comprises an integrally formed door cover 31 and a side panel 32, the junction of which is formed as a hinge 33, and the door cover 31 is positioned in the opening channel of the airbag to open around the hinge 33 in the event of a ignition.

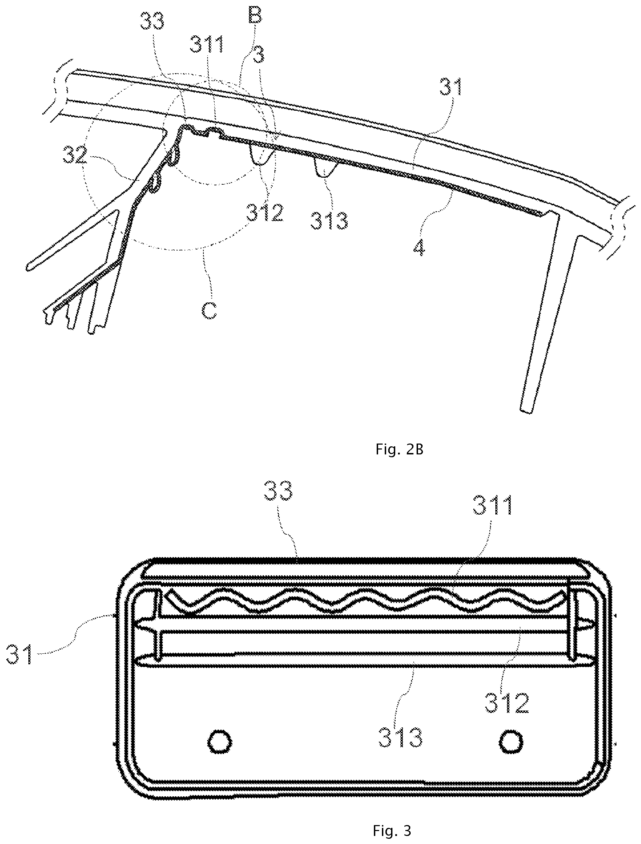

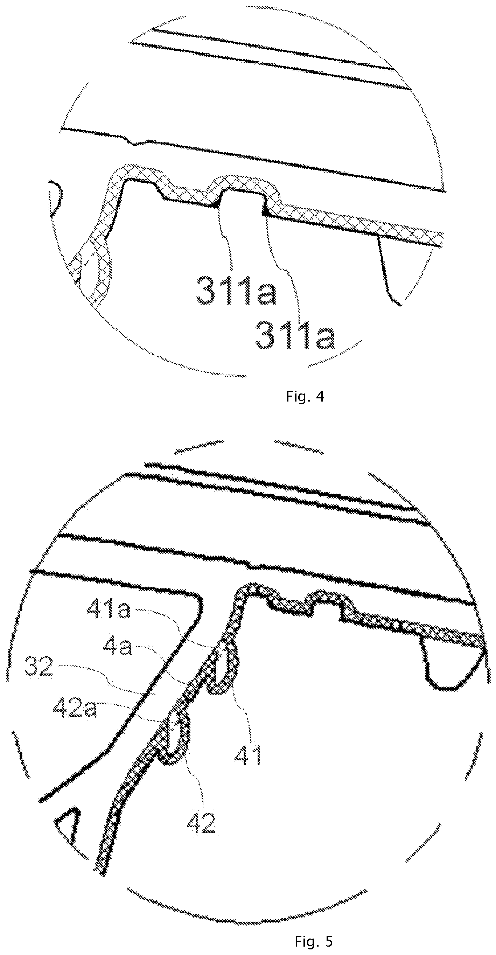

As shown in FIGS. 2B and 3, at least one recess 311 is formed in the bottom surface of the door cover 31 close to the hinge 33, thereby improving the bonding force between the mesh fabric 4 and the door cover 31. In the embodiment, the recess 311 is a wave groove extending parallel to the hinge 33. It should be understood that the waveforms herein are not limited to the shapes shown in the figures, nor to the continuous extension shown in the figures, and that it is possible to provide the recess, for example, from discrete semi-circular arc segments. In the embodiment, the door cover 31 is provided with a first pressing rib 312 and a second pressing rib 313, both extending parallel to the hinge 33, for pressing the mesh fabric 4 against the framework 3, and a recess 311 located between the hinge 33 and the first pressing rib 312, thereby preventing the first pressing rib 312 from being damaged, thereby preventing the first pressing rib 312 puncturing the airbag after rupture during airbag deployment, resulting in a safety hazard. In fact, the recess 311 can not only improve the bonding force between the mesh fabric 4 in the recess 311 and the door cover 31, but also confine the mesh fabric 4 at the first pressing ribs 312 to the bottom of the first pressing ribs 312. The inventors have surprisingly found that if the recess 311 is omitted, the mesh fabric 4 will not be able to conform to the door cover 31 during the injection molding of the first pressing rib 312, but will float to a position in the middle of the first pressing rib 312, which is clearly detrimental to the strength of the first pressing rib 312, thereby possibly leading to the above mentioned safety risk of puncturing the airbag after rupture. Preferably, the minimum distance of the recess 311 from the hinge 33 is between 3 and 5 mm and the distance of the first pressing rib 312 from the hinge 33 is between 10 and 30 mm. Preferably, the depth of the recess 311 is between 1 and 2 mm. In the present embodiment, the depth of the recess 311 is 1.5 mm. Preferably, the width of the recess 311 is between 2 and 4 mm. In the present embodiment, the width of the recess 311 is 3 mm. By disposing the recess 311, the contact surface between the door cover 31 and the mesh fabric 4 is increased, the peeling force between the mesh fabric 4 and the door cover 31 is increased, and the embedding length of the mesh fabric 4 is ensured to be consistent. The mesh fabric 4 is connected to the framework 3 by means of inserted injection molding, and during the inserted injection molding, a part of the resin penetrates through the mesh fabric 4 to form a reinforcing rib at the outer surface of the mesh fabric corresponding to the recess 311, so as to improve the bonding force between the mesh fabric 4 and the door cover 31. Specifically, as shown in FIG. 4, at the corners of the recess 311, the resin is advantageously exuded, and the reinforcing ribs are provided by the local gathering structure 311a, further increasing the peeling force. In the present embodiment, the peeling energy of the mesh fabric 4 and the door cover 31 is increased by 35.1%. It is ensured that the first pressing rib 312 is not damaged, increasing the design safety margin.

As shown in FIG. 5, the mesh fabric 4 connected to the side panel 32 has a first lifting ring 41 and a second lifting ring 42 which are connected in series, and such a double-lifting-ring mesh fabric is connected to the framework 3 by means of inserted injection molding, so as to facilitate more absorption of impact energy of the airbag when the airbag is deployed, thereby preventing the first pressing rib 312 from being damaged to cause the mesh fabric 4 to be detached from the door cover 31. The inventors have found that by optimizing one large lifting ring of the same warp thread to two small lifting rings (two lifting rings of the same warp thread, with the lifting rings facing in the same direction, ensuring both a constant length of the functional segment and a uniform lifting ring), the energy absorption of the mesh fabric is significantly improved over a single lifting ring functional segment. Specifically, the deploying energy absorption process of the functional zone mesh fabric 4 of the invention comprises three stages. The first stage is the breaking of the warp thread 41a and the subsequent deploying of the first lifting ring 41. The second stage is the peeling of the intermediate section 4a between the first lifting ring 41 and the second lifting ring 42 from the side panel 32. The third stage is the breaking of the warp thread 42a and the subsequent deploying of the second lifting ring 42, and the energy absorption effect is greatly improved. In the embodiment, the energy absorption is increased by at least more than one time with respect to the single lifting ring mesh fabric, and the explosion stability coefficient is significantly improved.

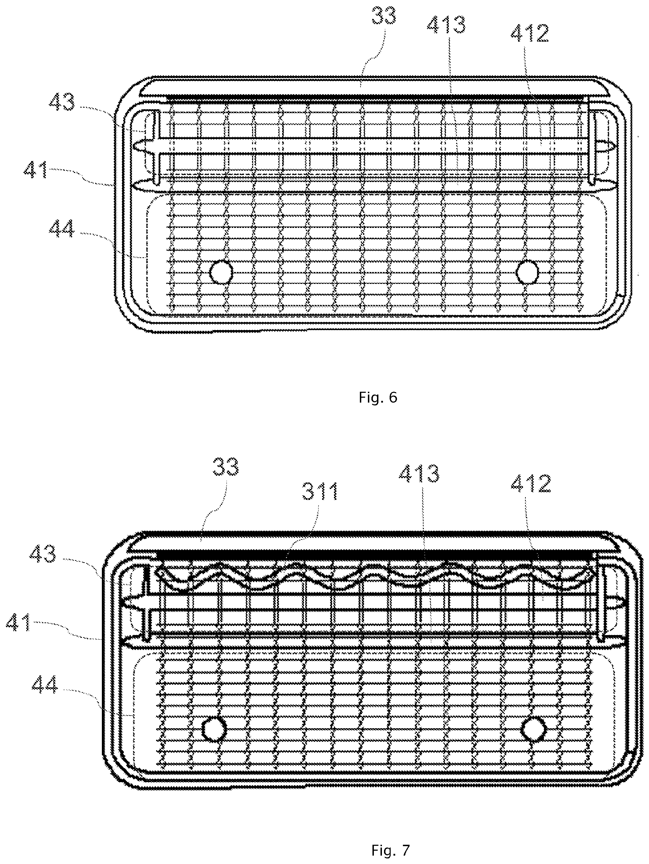

As shown in FIGS. 6 to 7, the mesh fabric 4 connected on the door cover 31 comprises a first region 43 and a second region 44, wherein the first region 43 is disposed close to the hinge 33, preferably 15 to 20 mm from the hinge 33, and the second region 44 is disposed away from the hinge 33. Specifically, the mesh fabric 4 of the first region 43 has a first weft density and the mesh fabric 4 of the second region 44 has a second weft density, the first weft density being less than the second weft density. In the embodiment, the first weft density is 3 threads per 10 mm or less, the second weft density is 5 to 7 threads per 10 mm and the preferred density is 6 threads per 10 mm. The inventors have found that such a weft density adjusted in segment can both increase the bonding force between the mesh fabric 4 of the first region 43 to the door cover 31 and ensure the selfstrength of the mesh fabric 4 of the second region 44, with respect to the same weft density used for the mesh fabrics 4 connected on the door cover 21 in the prior art. That is to say, the number of weft knitting of the mesh fabric 4 in the first region 43 is reduced, and after the density is reduced, the molten resin forming the framework 3 in the inserted injection molding process penetrates through the mesh fabric 4 at the recess edge portion, so that ribs similar to the shape of the recess 311 are formed on the side of the mesh fabric 4 away from the door cover 31, and these ribs can further improve the bonding force between the mesh fabric 4 and the door cover 31; the number of weft knitting of the mesh fabric 4 in the second region 44 ensures the stiffness of the mesh fabric 4 at the time of injection molding. In the embodiment, the first pressing rib 412 is located in the first region 43, thereby preventing the first pressing rib 312 from being damaged and preventing the mesh fabric 4 from being detached from the door cover 31.

It is noted that the invention (e.g. inventive concepts, etc.) has been described in the specification and/or illustrated in the drawings in accordance with exemplary embodiments; the present embodiments are presented by way of example only and are not intended as a limitation on the scope of the invention. The structures and/or arrangements of elements of the inventive concepts embodied in the invention as described in the specification and/or illustrated in the drawings are illustrative only. Although exemplary embodiments of the invention have been described in detail in the patent document, those of ordinary skill in the art will readily appreciate that equivalents, modifications, variations, etc. of the subject matter of the exemplary embodiments and alternative embodiments are possible and are considered to be within the scope of the invention; all such subject matter (e.g. modifications, variations, embodiments, combinations, equivalents, etc.) is intended to be comprised within the scope of the invention. It should also be noted that various/other modifications, changes, substitutions, equivalents, changes, omissions, etc. may be made in the configuration and/or arrangement of the exemplary embodiments (e.g. in terms of concepts, designs, structures, devices, forms, assemblies, configurations, means, functions, systems, processes/methods, steps, sequences of process/method steps, operations, operating conditions, properties, materials, compositions, combinations, etc.) without departing from the scope of the invention; all such subject matter (e.g. modifications, variations, embodiments, combinations, equivalents, etc.) is intended to be comprised within the scope of the invention. The scope of the invention is not intended to be limited to the subject matter (e.g. details, structures, functions, materials, acts, steps, sequences, systems, results, etc.) described in the description and/or drawings of the present patent document. It is contemplated that the claims of the patent document will be appropriately interpreted to cover the full scope of the inventive subject matter (e.g. comprising any and all such modifications, variations, embodiments, combinations, equivalents, etc.); it is to be understood that the terminology used in the patent documents is for the purpose of providing a description of the subject matter of the exemplary embodiments, and is not intended to limit the scope of the invention.

It should also be noted that, according to exemplary embodiments, the invention may comprise conventional techniques (e.g. techniques implemented and/or integrated in exemplary embodiments, modifications, variations, combinations, equivalents) or may comprise any other suitable techniques (present and/or future) having the ability to perform the functions and processes/operations described in the specification and/or illustrated in the drawings. All such techniques (e.g. techniques implemented in embodiments, modifications, variations, combinations, equivalents, etc.) are considered to be within the scope of the invention of the patent document.

## Claims

1. An airbag door structure, wherein mesh fabric is connected and fixed on an inner side of a framework facing an airbag; the framework comprises a door cover and a side panel which are connected by means of a hinge, the door cover is provided with a first pressing rib, and at least one recess formed in the bottom surface of the door cover close to the hinge; the recess is located between the hinge and the first pressing rib so as to improve the force of binding between the mesh fabric in the recess and the door cover and limit the mesh fabric located at the first pressing rib to a bottom of the first pressing rib; the mesh fabric connected to the side panel is provided with a first lifting ring and a second lifting ring which are connected in series, so as to facilitate absorption of airbag impact energy by means of inserted injection molding of both lifting rings mesh fabric.

2. The airbag door structure according to claim 1,
wherein the recess is configured to extend parallel to the hinge.

3. The airbag door structure according to claim 2,
wherein the recess is a continuously extending wave groove or comprises discrete semi-circular arc segments.

4. The airbag door structure according to claim 1,
wherein a minimum distance of the recess from the hinge is configured to be 3 to 5 mm, and a distance of the first pressing rib from the hinge is configured to be 10 to 30 mm.

5. The airbag door structure according to claim 1,
wherein the mesh fabric connected on the door cover comprises sectionalized weft densities.

6. The airbag door structure according to claim 5,
wherein the mesh fabric connected on the door cover comprises a first region located close to the hinge and a second region located away from the hinge, the mesh fabric of the first region having a first weft density and the mesh fabric of the second region having a second weft density, and the first weft density is less than the second weft density.

7. The airbag door structure according to claim 6,
wherein the first weft density is equal to or less than 3 threads per 10 mm.

8. The airbag door structure according to claim 6,
wherein the second weft density is 5 to 7 threads per 10 mm.

9. The airbag door structure according to claim 6,
wherein the door cover comprises a first pressing rib located in the first region.

10. The airbag door structure according to claim 1,
wherein the mesh fabric is connected to the framework by means of inserted injection molding, and a part of resin permeates through the mesh fabric during the inserted injection molding, thereby forming a reinforcing rib at an outer surface of the mesh fabric corresponding to the recess to improve the force of binding between the mesh fabric and the door cover.

11. A vehicle interior component, comprising an instrument panel on which an airbag door structure is mounted, a mesh fabric is connected and fixed on an inner side of a framework facing an airbag; the framework comprising a door cover and a side panel which are connected by means of a hinge, wherein the door cover forms at least one recess on a bottom surface close to the hinge to improve the force of binding between the mesh fabric in the recess and the door cover.

12. The vehicle interior component according to claim 11,
wherein the recess is configured to extend parallel to the hinge.

13. The vehicle interior component according to claim 11,
wherein the recess is a continuously extending wave groove.

14. The vehicle interior component according to claim 11,
wherein the recess comprises discrete semi-circular arc segments.

15. The vehicle interior component according to claim 11,
wherein the minimum distance of the recess from the hinge is 3 to 5 mm.

16. The vehicle interior component according to claim 11,
wherein the door cover comprises at least a first region located close to the hinge and a second region located away from the hinge.

17. The vehicle interior component according to claim 16, wherein the mesh fabric connected on the door cover comprises sectionalized weft densities.

18. The vehicle interior component according to claim 17,
wherein the mesh fabric connected on the door cover comprises a first region located close to the hinge and a second region located away from the hinge, the mesh fabric of the first region having a first weft density and the mesh fabric of the second region having a second weft density, and the first weft density is less than the second weft density.

19. The vehicle interior component according to claim 18,
wherein the first weft density is equal to or less than 3 threads per 10 mm.

20. The vehicle interior component according to claim 18,
wherein the second weft density is 5 to 7 threads per 10 mm.

21. The vehicle interior component according to claim 16,
wherein the door cover comprises at least one pressing rib.

22. The vehicle interior component according to claim 21,
wherein the pressing rib is formed on a bottom surface close to the hinge.

23. The vehicle interior component according to claim 21,
wherein the pressing rib is located in the first region.

24. The vehicle interior component according to claim 23,
wherein a distance between the pressing rib and the hinge is 10 to 30 mm.

25. The vehicle interior component according to claim 11,
wherein the mesh fabric is connected to the side panel and comprises at least one lifting ring to facilitate absorption of airbag impact energy.

26. The vehicle interior component according to claim 25,
wherein the mesh fabric is connected to the side panel and comprises a first lifting ring and a second lifting ring which are connected in series with the first lifting ring to facilitate absorption of airbag impact energy.

27. The vehicle interior component according to claim 11,
wherein the mesh fabric is connected to the framework by means of inserted injection molding, and a part of resin permeates through the mesh fabric during the inserted injection molding, thereby forming at least one reinforcing rib at an outer surface of the mesh fabric corresponding to the recess to improve the force of binding between the mesh fabric and the door cover.

28. The vehicle interior component according to claim 23,
wherein the door cover is provided with a first pressing rib formed on a bottom surface close to the hinge, and the recess is disposed between the hinge and the first pressing rib so as to improve the force of binding between the mesh fabric in the recess and the door cover.

29. The vehicle interior component according to claim 23,
wherein the door cover is provided with a first pressing rib formed on a bottom surface close to the hinge, and the recess is located between the hinge and the first pressing rib to limit the mesh fabric located at the first pressing rib to a bottom of the first pressing rib.

30. The vehicle interior component according to claim 11,
wherein the mesh fabric is connected to the framework by means of inserted injection molding, and a part of resin permeates through the mesh fabric during the inserted injection molding, thereby forming a reinforcing rib at an outer surface of the mesh fabric corresponding to the recess to improve the force of binding between the mesh fabric and the door cover.

31. A manufacturing method for a vehicle interior component, wherein the vehicle interior component comprises an instrument panel on which an airbag door structure is mounted, the method comprising:
- forming a framework, a door cover, at least one reinforcing rib and a recess,
- connecting mesh fabric to the framework by means of inserted injection molding, and
- a part of resin permeating through the mesh fabric during the inserted injection molding, thereby forming a reinforcing rib at an outer surface of the mesh fabric corresponding to the recess to improve the force of binding between the mesh fabric and the door cover.

32. The method according to claim 31,
wherein the mesh fabric is formed on a side panel of the framework.

33. The method according to claim 31,
wherein the mesh fabric comprises a first lifting ring and a second lifting ring which are connected in series by means of inserted injection molding of both lifting rings mesh fabric.
